# EUROPÄISCHE PATENTSCHRIFT

(11) **EP 0 936 025 B1**
(45) Veröffentlichungstag und Bekanntmachung des Hinweises auf die Patenterteilung: **31.03.2004**
(21) Anmeldenummer: 99102416.7
(22) Anmeldetag: 09.02.1999
(51) Int. Cl.: B23Q 3/18, B23Q 7/14, B23Q 1/00

(54) **Spannsystem mit Spannzylinder und Aufspannteil**
Clamping system with clamping cylinder and clamping part
Système de serrage avec cylindre de serrage et dispositif de serrage

(30) Priorität: 10.02.1998 DE 19805165
(43) Veröffentlichungstag der Anmeldung: 18.08.1999
(73) Patentinhaber: Stark Spannsysteme GmbH, 6840 Götzis (AT)
(72) Erfinder: Stark, Emil, 6840 Götzis (AT)
(74) Vertreter: von Ahsen, Erwin-Detlef, Dipl.-Ing.

(56) Entgegenhaltungen:
- EP-A- 0 873 815
- EP-A- 0 873 818
- US-A- 4 662 043
- US-A- 5 190 272

## Beschreibung

Die vorliegende Erfindung beschäftigt sich mit einem Spannsystem nach dem Oberbegriff des Anspruchs 1.

Ein derartiges Spannsystem ist mit der auf denselben Anmelder zurückgehenden deutschen Patentanmeldung 41 35 418 bekanntgeworden.

Das bekannte Spannsystem weist einen Zylinder und einen Einzugsnippel auf, der an einem Aufspannteil, z. B. einer Palette, befestigt ist. Der Einzugsnippel wird von dem Spannzylinder eingezogen und dabei gleichzeitig zentriert. Diese Zentrierung erfolgt hochgenau, so daß die Lage des Einzugsnippels an der Palette als Nullpunkt angesehen werden kann. Der Einzugsnippel wird hierbei in eine Aufnahme des Spannzylinders eingezogen.

Bei dem bekannten Spannsystem erfolgt die Zentrierung dadurch, daß sich der Einzugsnippel selbst mit entsprechenden Flächen an zugeordneten Anlageflächen in der Aufnahme des Spannzylinders anlegt. Der Einzugsnippel sowie die Aufnahme sind rund ausgebildet.

Ein Nachteil dieses bekannten Spannsystem ist, daß zum Fixieren eines Aufspannteils stets mindestens zwei Einzugsnippel verwendet werden müssen. Bei der Verwendung nur eines Einzugsnippels kann eine gegenseitige Verdrehung zwischen Spannzylinder und Aufspannteil während der Bearbeitung stattfinden.

Es ist zwar möglich, daß bekannte Spannsystem mit Anschlägen zu versehen, die eine derartige Verdrehung ausschließen sollen. Allerdings erfordern diese Anschläge ein genau ausgerichtetes Aufsetzen des Aufspannteils. Bei rotationssymmetrisch zu bearbeitenden Werkstücken ist eine derartige Positionierung allerdings nicht notwendig und stellt einen unnötigen Arbeitsschritt dar.

Die US-A-4 662 043 zeigt ein Spannsystem, bei dem ein Aufspannteil mittels radial spannender Spannfinger aufgespannt wird. Dadurch läßt sich zuverlässig eine Verdrehsicherung erreichen. Nachteilig hierbei ist jedoch der hohe konstruktive Aufwand.

Aufgabe der vorliegenden Erfindung ist es daher, ein Spannsystem der eingangs genannten Art dahingehend weiterzubilden, daß auch bei der Verwendung nur eines Einzugsnippels eine zuverlässige Verdrehsicherung zwischen dem Spannzylinder und dem Aufspannteil sichergestellt ist.

Erfindungsgemäß wird diese Aufgabe durch die Merkmale des Anspruchs 1 gelöst.

Wesentlich hierbei ist, daß die Zentrierung zwischen dem Aufspannteil und dem Spannzylinder nun am Außenumfang des Spannzylinders erfolgt.

Mit dieser Ausführungsform ergibt sich ein sehr viel längerer Hebelarm für die einer Verdrehung entgegenwirkenden Kräfte zwischen Spannzylinder und Aufspannteil. Bei der bekannten Ausführungsform war dieser Hebelarm auf den Radius des Einzugsnippels beschränkt, während jetzt der Radius des Schnellspannzylinders genutzt werden kann. Gleichzeitig ergibt sich eine sehr viel größere Anlagefläche, so daß bei gleichbleibender Flächenpressung an den Berührflächen insgesamt auch eine sehr viel größere einer Verdrehung entgegenwirkende Kraft realisiert werden kann, ohne die zulässigen Materialgrenzen zu überschreiten.

In einer ersten Ausführungsform der Erfindung ist vorgesehen, den Spannzylinder mit einer konischen Anlagefläche an seinem Außenumfang zu versehen. Selbstverständlich kann diese konische Anlagefläche auch an einem Deckel des Spannzylinders angebracht sein. Entsprechend ist das Aufspannteil mit einer zugeordneten Schrägfläche versehen.

Diese Schrägfläche ist bevorzugt an einem Flansch des Aufspannteils ausgebildet. Der Flansch kann radial federnd ausgebildet sein. Bei dieser vorteilhaften Weiterbildung wird der Flansch bevorzugt so ausgelegt, daß er in gespanntem Zustand radial etwas aufgebogen wird. Hierdurch ergibt sich automatisch eine bestimmte Vorspannkraft.

In einer anderen Ausführungsform ist die Zentrierung zwischen dem Spannzylinder und dem Aufspannteil in Form einer Verzahnung, bevorzugt einer Hirth-Verzahnung, ausgebildet. Eine derartige Verzahnung stellt eine formschlüssige Lagersicherung dar, die noch sehr viele größere Drehmomente bewältigen kann als die reibschlüssige Verbindung über die konischen Berührflächen.

Für den Fall, daß doch eine bestimmte gegenseitige Winkellage zwischen Aufspannteil und Spannzylinder eingehalten werden soll, kann hierfür eine eigene Sicherung vorgesehen sein. Diese Sicherung muß nicht dafür geeignet sein, um hohe Belastungen aufzunehmen und abzufangen, da dies über die Zentrierung am Außenumfang des Spannzylinders geschieht.

In einer bevorzugten Ausführungsform besteht diese Sicherung aus einem elastisch verformbaren Ring, der in einer zugeordneten Ausnehmung des Aufspannteils befestigt ist. In zusammengebauten Zustand greift dieser Ring in eine Nut am Spannzylinder oder dessen Deckel ein. Der Ring ist hierbei etwas kleiner als die Nut ausgebildet, so daß er im Zusammenbau etwas verformt wird. Diese Verformung findet statt, ehe die Zentrierung am Außenumfang des Spannzylinders wirksam wird. Die Kraft, die hierbei auf den Ring und damit auf das Aufspannteil aufgebracht wird, ist ausreichend, um das Aufspannteil geringfügig gegenüber dem Spannzylinder zu verdrehen und damit in die gewünschte Winkellage zu bringen.

Der Ring und die Nut am Spannzylinder oder dessen Deckel können konisch ausgebildet sein.

Um die Flexibilität des gesamten Systems zu erhöhen ist vorgesehen, den Spannzylinder mit mindestens einem Anschluß zum Einbringen einer Druckflüssigkeit zu versehen.Diese Druckflüssigkeit ist erforderlich, um einen eingezogenen Einzugsnippel wieder zu lösen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

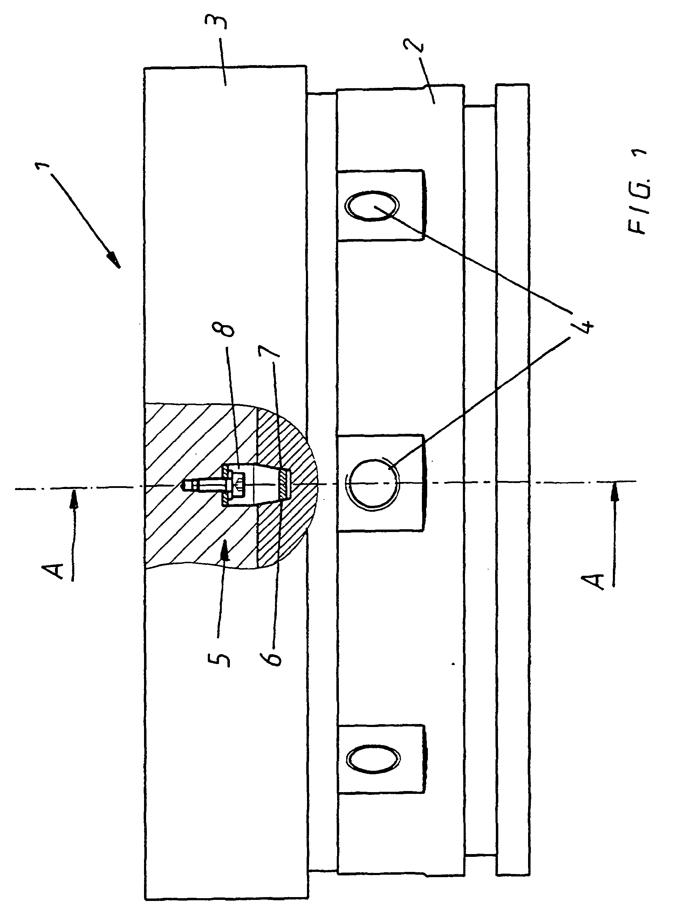

Dabei zeigt Figur 1 eine Seitenansicht eines erfindungsgemäßen Spannsystems, teilweise im Schnitt
Figur 2 eine Ansicht von unten auf ein Aufspannteil
Figur 3 eine Ansicht von oben auf einen Spannzylinder
Figur 4 einen Schnitt längs der Linie A-A in Figur 1
Figur 5 eine Ansicht ähnlich Figur 4 in einer zweiten Ausführungsform
Figur 6 eine Ansicht ähnlich Figur 4 in einer dritten Ausführungsform
Figur 7 eine Ansicht ähnlich Figur 4 in einer vierten Ausführungsform.

In der folgenden Beschreibung werden gleiche oder ähnliche Bauteile mit identischen Bezugszeichen versehen. Diese Bauteile werden nachfolgend nur einmal beschrieben.

In den Figuren 1 bis 3 sind ein erfindungsgemäßes Spannsystem 1 sowie ein Spannzylinder 2 und ein Aufspannteil 3 dargestellt. Der Spannzylinder 2 weist hierbei mehrere Anschlüsse 4 zum Einbringen einer Druckflüssigkeit auf.

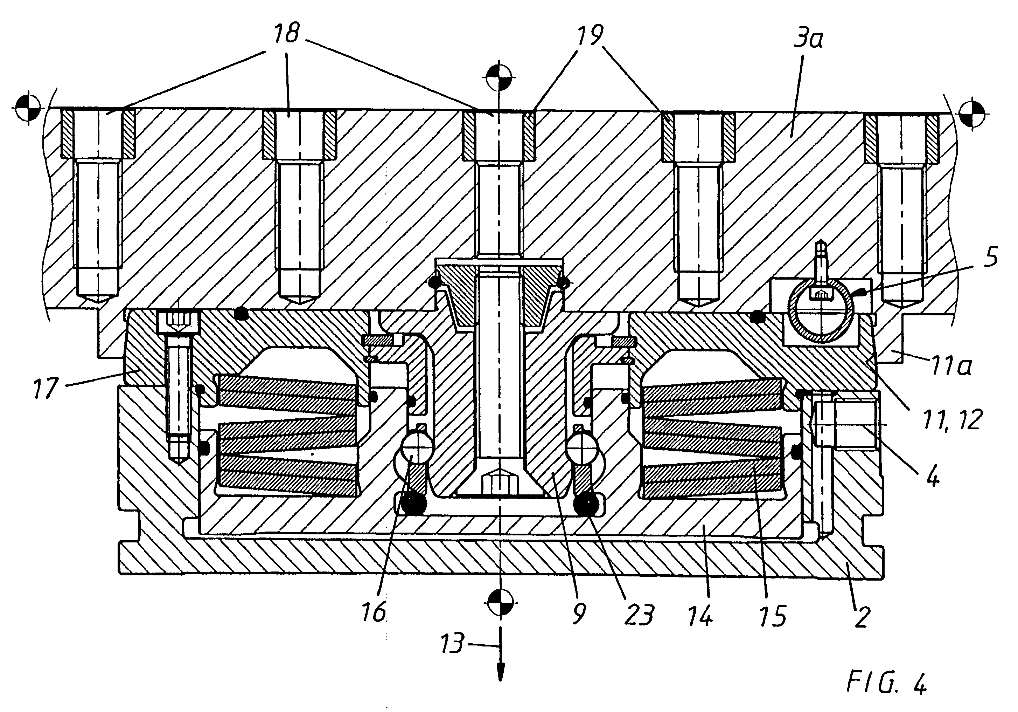

In Figur 1 ist eine Winkelsicherung 5 dargestellt, die in zusammengebautem Zustand zwischen dem Spannzylinder 2 und dem Aufspannteil 3 wirkt. Diese Winkelsicherung 5 besteht aus einem Ring 6, der in einer Ausnehmung 8 des Aufspannteils 3 befestigt ist. Der Ring 6 greift in eine Nut 7 am Spannzylinder 2 bzw. an dessen Deckel 17 (Figur 4). Sowohl der Ring 6 als auch die Nut 7 sind im gezeigten Ausführungsbeispiel konisch.

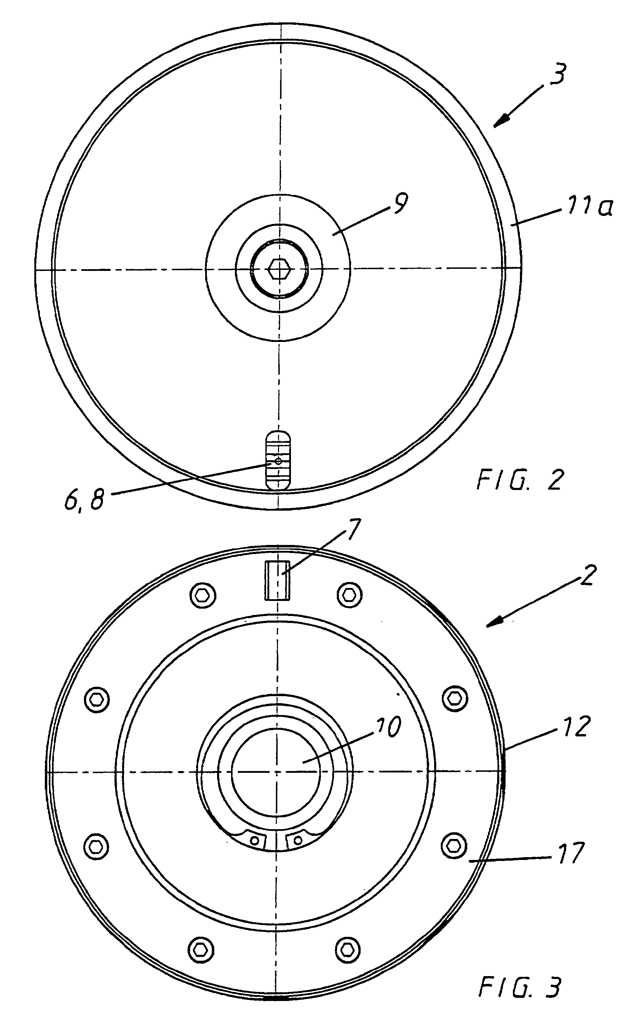

Die Figuren 2 und 3 zeigen, daß das auf Spannteile 3 sowie der Spannzylinder 2 im wesentlichen rund ausgebildet sind. Das Aufspannteil 3 ist mit einem Nippel 9 versehen, der ebenfalls rund ausgebildet ist und in eine Ausnehmung 10 des Spannzylinders 2 eingesetzt werden kann und dort von dem Spannzylinder 2 eingezogen und fixiert wird. Die Zentrierung erfolgt hierbei über einen Flansch 11a am Aufspannteil 3, der sich an einer Anlagefläche 12 des Spannzylinders 2 oder dessen Deckel 17 anliegt

In Figur 4 ist ein Querschnitt durch eine Ausführungsform des erfindungsgemäßen Spannsystems dargestellt. Im Spannzylinder 2 ist ein Kolben 14 angeordnet, der in Pfeilrichtung 13 und in Gegenrichtung hierzu verschiebbar ist. Die Verschiebung in Pfeilrichtung 13 geschieht mittels einer oder mehrerer Federn 15, die zwischen dem Kolben 14 und dem Deckel 17 angeordnet sind. Ein Verschieben in Gegenrichtung wird durch das Einbringen einer Hydraulikflüssigkeit über den Anschluß 4 bewirkt.

Das Einziehen des Nippels 9 geschieht mit Hilfe eines Kugelkäfigs 16, der sich in einem schematisch dargestellten O-Ring 23 abschließt.

In dem gezeigten Zustand ist der Nippel 9 eingespannt. Die Kugeln des Kugelkäfig 16 sind radial einwärts gedrückt und hintergreifen den Einzugsnippel 9. Zum Lösen wird über den Anschluß 4 eine Druckflüssigkeit eingebracht, die den Kolben 14 entgegen Pfeilrichtung 13 nach oben drückt. Die Kugeln des Kugelkäfigs 16 kommen somit in den Bereich der umlaufenden Nut im Kolben 14 und können hier radial nach außen fallen. Hierdurch wird der Nippel 9 freigegeben, so daß das gesamte Aufspannteil 3a freigegeben wird.

Die Zentrierung zwischen dem Aufspannteil 3a und dem Schnellspannzylinder 2 erfolgt über Schrägflächen 12, 22. Die Schrägfläche 12 ist hierbei an dem Deckel 17 angebracht, der wiederum gegenüber dem Spannzylinder 2 zentriert ist. Die Schrägfläche 22 befindet sich auf einem radial biegsamen Flansch 11a, der im gezeigten Ausführungsbeispiel materialeinstückig mit dem Aufspannteil 3a verbunden ist. Selbstverständlich kann dieser Flansch 11a auch in Form eines getrennten Bauteils realisiert werden.

Das Aufspannteil 3a wird über den Nippel 9 und die Anlageflächen 12, 22 in einer genau definierten, nullpunktorientierten Lage gegenüber dem Spannzylinder 2 gehalten. Entsprechend sind die Bohrungen 18 und Buchsen 19, die in dem Aufspannteil 3a angebracht sind, ebenfalls nullpunktorientiert gegenüber dem Spannzylinder 2.

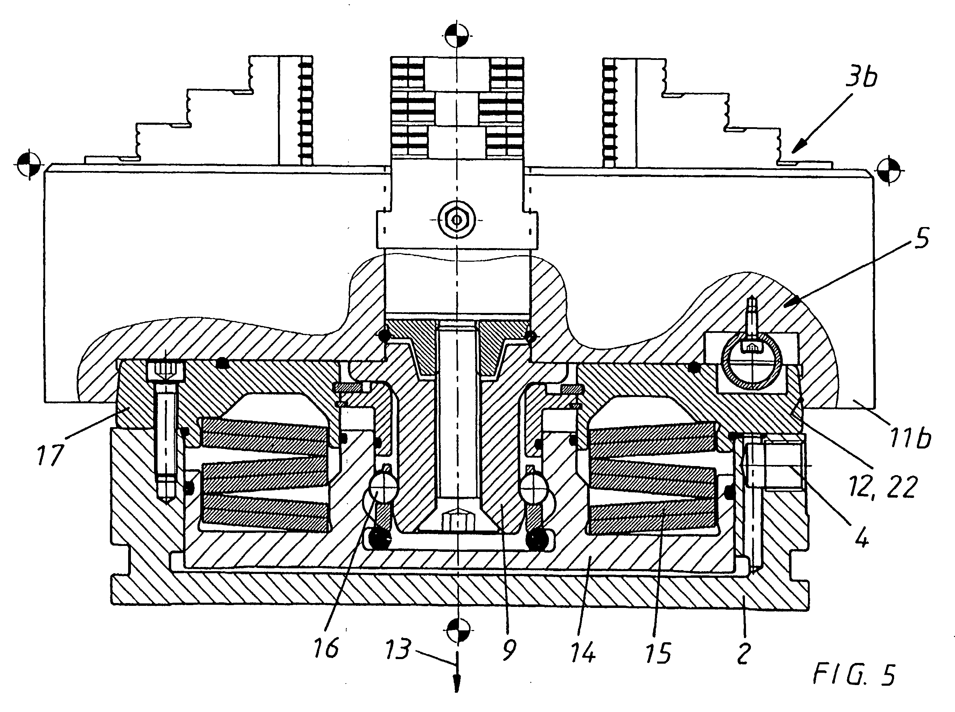

Figur 5 zeigt eine abgewandelte Ausführungsform, bei der als Aufspannteil 3b ein Backenfutter zum Einsatz kommt. Hier wird ein Flansch 11b verwendet, der radial im wesentlichen unverformbar ist.

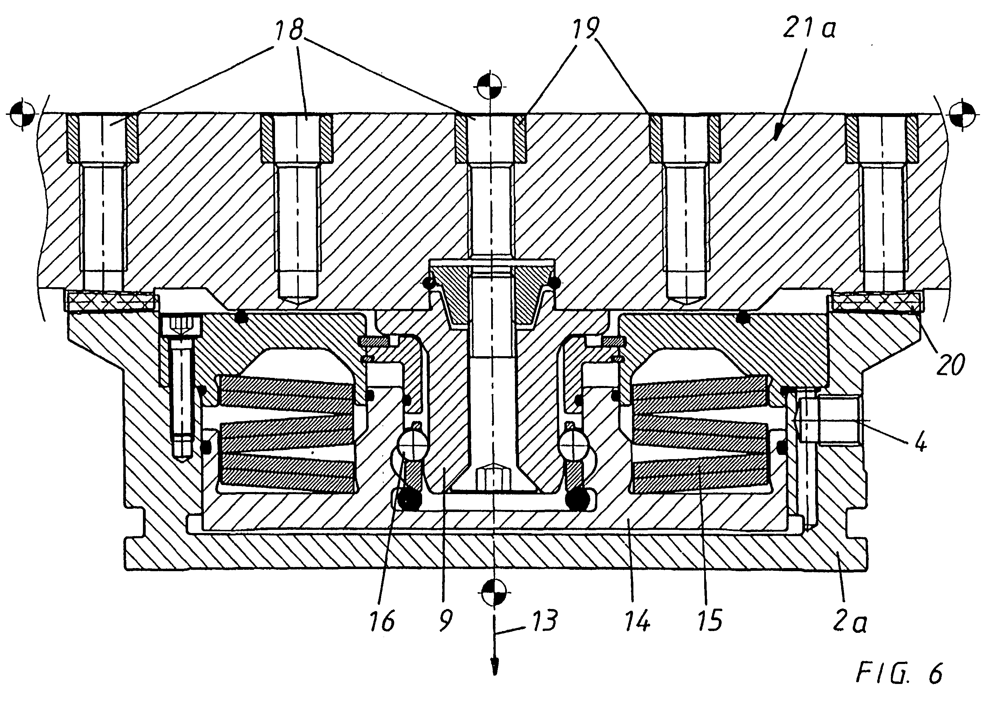

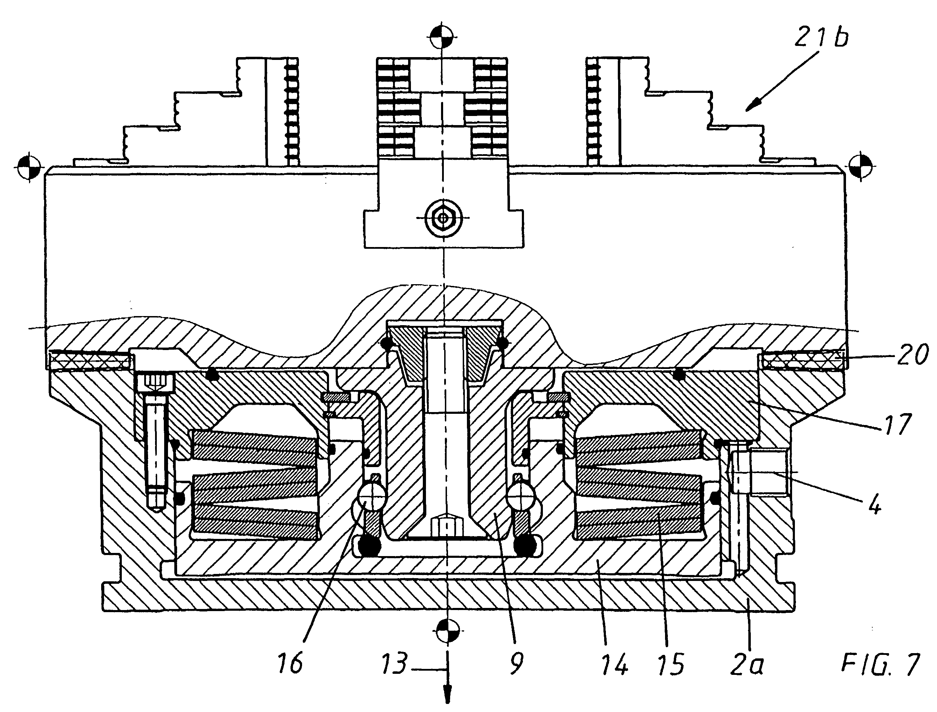

Die Figuren 6 und 7 zeigen Ansichten ähnlich den Figuren 4 und 5, bei denen keine Schrägflächen, sondern eine Verzahnung 20 zum Einsatz kommt. Die entsprechenden Aufspannteile 21a, 21b sowie der Spannzylinder 2a sind mit zugeordneten, aufeinander abgestimmten Zähnen versehen. Es wird eine Hirth-Verzahnung bevorzugt, wobei aber auch andere Verzahnungen zum Einsatz kommen können.

Selbstverständlich kann auch in diesen beiden Ausführungsformen eine Winkelsicherung 5 wie in den Figuren 4 und 5 dargestellt verwendet werden.

Insgesamt ergibt sich mit dem Gegenstand der vorliegenden Erfindung ein sehr viel belastbareres Spannsystem, bei dem auch bei Verwendung nur eines Spannzylinders und entsprechend nur eines Einzugsnippels eine hervorragende Verdrehsicherung zwischen dem Spannzylinder und dem Aufspannteil gegeben ist.

### Zeichnungslegende

- 1: Spannsystem
- 2: Spannzylinder
- 3: Aufspannteil
- 4: Anschlußwinkel
- 5: Sicherung
- 6: Ring
- 7: Nut
- 8: Ausnehmung
- 9: Nippel
- 10: Ausnehmung
- 11: Flansch
- 12: Anlagefläche
- 13: Pfeilrichtung
- 14: Kolben
- 15: Feder
- 16: Kugelkäfig
- 17: Deckel
- 18: Bohrung
- 19: Buchse
- 20: Verzahnung
- 21: Aufspannteil
- 22: Schrägfläche
- 23: O-Ring

## Patentansprüche

1. Spannsystem, bestehend aus einem Spannzylinder und einem Aufspannteil, das mit einem Einzugsnippel versehen ist, der geeignet ist für ein Einsetzen und Einziehen durch den Spannzylinder zum Spannen des Aufspannteils in Axialrichtung des Spannzylinders, **dadurch gekennzeichnet, daß** eine Zentrierung zwischen dem Aufspannteil (3, 21) und dem Spannzylinder (2) am Außenumfang des Spannzylinders (2) erfolgt.

2. Spannsystem nach Anspruch 1, **dadurch gekennzeichnet, daß** die Zentrierung reib- oder formschlüssig erfolgt.

3. Spannsystem nach Anspruch 1 oder 2, **dadurch gekennzeichnet, daß** die Zentrierung in Form einer konischen Anlagefläche (12) am Spannzylinder (2) oder an einem Deckel (17) des Spannzylinders (2) ausgebildet ist, die mit einer. Schrägfläche (22) am Aufspannteil (3) zusammenwirkt.

4. Spannsystem nach Anspruch 3, **dadurch gekennzeichnet, daß** die Schrägfläche (22) an einem Flansch (11a, 11b) des Aufspannteils (3) ausgebildet ist.

5. Spannsystem nach Anspruch 4, **dadurch gekennzeichnet, daß** der Flansch (11a) des Aufspannteils (3) radial federnd ausgebildet ist.

6. Spannsystem nach Anspruch 1 oder 2, **dadurch gekennzeichnet, daß** die Zentrierung in Form einer Verzahnung (20), insbesondere einer Hirth-Verzahnung, ausgebildet ist.

7. Spannsystem nach einem der Ansprüche 1 - 6, **dadurch gekennzeichnet, daß** eine Sicherung (5) zum Festlegen der gegenseitigen Winkellage zwischen Spannzylinder (2) und Aufspannteil (3) vorgesehen ist.

8. Spannsystem nach Anspruch 7, **dadurch gekennzeichnet, daß** die Sicherung (5) aus einem elastisch verformbaren Ring (6) besteht, der in einer Ausnehmung (8) des Aufspannteils (3) befestigt ist und in zusammengebautem Zustand in eine Nut (7) am Spannzylinder (2) oder in dessen Deckel (17) eingreift.

9. Spannsystem nach Anspruch 8, **dadurch gekennzeichnet, daß** der Ring (6) und die Nut (7) konisch ausgebildet sind.

10. Spannsystem nach einem der Ansprüche 1 - 9, **dadurch gekennzeichnet, daß** der Spannzylinder (2) mit mindestens einem Anschluß (4) zum Einbringen einer Druckflüssigkeit versehen ist.

## Claims

1. Clamping system consisting of a clamping cylinder and a clamping element provided with a draw-in nipple suitable for insertion and drawing-in caused by said clamping cylinder for clamping said clamping element in the axial direction of said clamping cylinder, **characterised in that** centring is performed between said clamping element (3, 21) and said clamping cylinder (2) on the outer periphery of said clamping cylinder (2).

2. Clamping system according to Claim 1, **characterised in that** centring is performed in a positive or frictional engagement.

3. Clamping system according to the Claim 1 or 2, **characterised in that** the centring means is provided in the form of a conical bearing surface (12) on said clamping cylinder (2) or an a lid (17) of said clamping cylinder (2), which centring means cooperates with an inclined surface (22) on said clamping element (3).

4. Clamping system according to Claim 3, **characterised in that** said inclined surface (22) is formed on a flange (11a, 11b) of said clamping element (3).

5. Clamping system according to Claim 4, **characterised in that** said flange (11a) of said clamping element (3) has a radially resilient configuration.

6. Clamping system according to Claim 1 or 2, **characterised in that** said centring means is provided in the form of a toothing (20), particularly a groove toothing.

7. Clamping system according to any of the Claims 1 to 6, **characterised in that** locking means (5) are provided for fixing the mutually relative angular position between said clamping cylinder (2) and said clamping element (3).

8. Clamping system according to Claim 7, **characterised in that** said locking means (5) consist of a resiliently deformable ring (6) that is fastened in a recess (8) of said clamping element (3) and, in the assembled state, engages in a groove (7) on said clamping cylinder (2) or the lid (17) of the latter.

9. Clamping system according to Claim 8, **characterised in that** said ring (6) and said groove (7) present a conical configuration.

10. Clamping system according to any of the Claims 1 to 9, **characterised in that** said clamping cylinder (2) is provided with at least one port (4) for the supply of a pressurised liquid.

## Revendications

1. Système de serrage composé d'un cylindre de serrage et d'un élément de serrage muni d'un nipple d'insertion approprié à l'introduction et l'insertion induite par ledit cylindre de serrage pour le serrage dudit élément de serrage en sens axial dudit cylindre de serrage, **caractérisé en ce que** le centrage se fait entre ledit élément de serrage (3, 21) et ledit cylindre de serrage (2) sur la périphérie extérieure dudit cylindre de serrage (2).

2. Système de serrage selon la revendication 1, **caractérisé en ce que** le centrage se fait par friction ou par engagement positif.

3. Système de serrage selon la revendication 1 ou 2, **caractérisé en ce que** le moyen de centrage est disposé sous forme d'une surface d'appui conique (12) sur ledit cylindre de serrage (2) ou sur un couvercle (17) dudit cylindre de serrage (2), ce moyen de centrage coopérant avec une surface inclinée (22) sur ledit élément de serrage (3).

4. Système de serrage selon la revendication 3, **caractérisé en ce que** ladite surface inclinée (22) est formée sur une flasque (11a, 11b) dudit élément de serrage (3).

5. Système de serrage selon la revendication 4, **caractérisé en ce que** ladite flasque (11a) dudit élément de serrage (3) présente une configuration élastique en sens radial.

6. Système de serrage selon la revendication 1 ou 2, **caractérisé en ce que** ledit moyen de centrage est disposé sous forme d'une denture (20), en particulier sous forme d'un crantage Hirth.

7. Système de serrage selon une quelconque des revendications 1 à 6, **caractérisé en ce que** des moyens d'arrêt (5) sont disposés pour la fixation de la position angulaire dudit cylindre de serrage (2) relativement audit élément de serrage (3).

8. Système de serrage selon la revendication 7, **caractérisé en ce que** lesdits moyens d'arrêt consistent (5) en un anneau (6) déformable de manière élastique, qui est fixé dans un évidement (8) dudit élément de serrage (3) et qui, en état monté, est pris dans une rainure (7) sur ledit cylindre de serrage (2) ou sur son couvercle (17).

9. Système de serrage selon la revendication 8, **caractérisé en ce que** ledit anneau (6) et ladite rainure (7) présente une configuration conique.

10. Système de serrage selon une quelconque des revendications 1 à 9, **caractérisé en ce que** ledit cylindre de serrage (2) est muni d'au moins un raccord (4) pour l'alimentation d'un liquide sous pression.
